# EUROPEAN PATENT SPECIFICATION

(11) **EP 1 345 862 B1**
(45) Date of publication and mention of the grant of the patent: **12.07.2006**
(21) Application number: 01272049.6
(22) Date of filing: 19.12.2001
(51) Int. Cl.: C03C 13/06

(54) **RAW MATERIAL FOR THE PRODUCTION OF MINERAL FIBRES**
ROHMATERIAL ZUR HERSTELLUNG MINERALISCHER FASERN
MATIERE PREMIERE SERVANT A PRODUIRE DES FIBRES MINERALES

(30) Priority: 22.12.2000 FI 20002827; 26.01.2001 FI 20010165
(43) Date of publication of application: 24.09.2003
(73) Proprietor: Paroc Group Oy Ab, 01300 Vantaa (FI)
(72) Inventor: HAKALA, Jan, FIN-20540 Turku (FI)
(74) Representative: Grew, Eva Regina
(86) International application number: PCT/FI2001/001126
(87) International publication number: WO 2002/051766

(56) References cited:
- EP-A2- 0 792 843
- WO-A1-00/73233
- SE-C- 197 942
- US-A- 5 932 500
- US-A- 6 156 683

## Description

### FIELD OF THE INVENTION

The present invention is directed to a raw material for the production of mineral fibres, especially of mineral fibres having an increased Al₂O₃ content. The invention is also directed to a method for making such fibres, using the raw material according to the invention.

### BACKGROUND OF THE INVENTION

Aluminium is a desired component in mineral wool fibres, as it improves the temperature resistance of the mineral fibres and the mineral wool product made therefrom. When aluminium is included in an amount of appr. 15 to 25 % by weight, calculated as Al₂O₃, the fibre also shows improved solubility in biological fluids. Bauxite has traditionally been used as the main aluminium source when making mineral fibres in mineral wool production. However, from the point of view of melting behaviour and melt characteristics, bauxite is not an optimal raw material for introducing aluminium in the melt. In the melting furnace, bauxite does not melt as such, but is calcinated, the aluminium dissolving into the silicate melt by first forming oxides. This is a slow and energy consuming process.

Leucogabbro is a light, aluminium containing rock material which can be found in many countries and on all continents; larger deposits can be found for example in Canada, Greenland, Norway and Finland. These types of rocks contain typically from 25 to 35 % by weight of Al₂O₃. The main mineral of leucogabbro is plagioclase. Plagioclase is an aluminium containing solid silicate solution, the mineral composition of which spans from albite (NaAlSi₃O₈) to anorthite (CaAl₂Si₂O₈), the mineral composition containing Al₂O₃ in an amount ranging from 20 to 36 % by weight.

Raw material charges for mineral wool production also typically contain iron oxides in divalent and trivalent form, as well as magnesium oxide. Iron and magnesium have a beneficial effect on the temperature resistance of the fibre. Typical amounts of iron to be included in the fibre are amounts up to appr. 10 % by weight, but iron can to some degree be substituted by magnesium.

Troctolite is an iron and magnesium rich rock material. Troctolite typically contains more than 35 volume % iron and magnesium rich mineral olivine, the remaining mineral being mainly plagioclase, with lesser amounts of other minerals. Olivine is a solid iron and/or magnesium containing silicate solution, the mineral spanning from magnesium-rich forsterite to iron-rich fayalite. Depending on the troctolite type, troctolite can contain iron from an amount of more than appr. 10 % by weight, even up to amounts as high as appr. 40 % by weight The magnesium content in turn can vary from appr. 5 % by weight even up to appr. 20 % by weight. Troctolite is thus a potential iron and magnesium source for inclusion in a mineral charge for mineral fibres.

A raw material charge for mineral wool production typically also contains fluxing components for controlling and regulating the viscosity of the mineral melt. Such fluxes are typically calcium and magnesium containing compounds. Also dolomite rock is used as a fluxing component and as a calcium and magnesium source. Dolomite, however, has the disadvantage that when used in higher amounts in the charge it tends to foam, which is not a desirable characteristic in a melt under fibre production conditions. In addition, dolomite gives rise to carbon dioxide emissions from the melt, which from an environmental point of view is not desirable. Also, such emissions also necessarily mean energy losses in the production.

### SUMMARY OF THE INVENTION

The object of the present invention is to provide a raw material charge for mineral fibre production that is not only optimal from the point of view of the chemical composition of the melt and consequently of the manufactured fibre, especially as regards the aluminium and iron/magnesium contents, but which also provides a melt with good melting behaviour and melt characteristics. Another aim of the invention is to provide a raw material charge, wherein some of the dolomite included for fluxing purposes is substituted by calcium and magnesium containing minerals, allowing the formation of the melt with a lesser energy input and lesser load on the environment. In the alternative, the invention allows for the formation of a melt with an increased calcium and magnesium content without a simultaneous increase in the load on the environment in the form of increased carbon dioxide emissions.

These objects are achieved with the raw material charge according to the invention, which contains leucogabbro, troctolite and dolomite rock, in the following amounts
- leucogabbro 10 to 45 % by weight
- troctolite 3 to 20 % by weight, and
- dolomite 5 to 30 % by weight.

### DETAILED DESCRIPTION OF THE INVENTION

More specifically, the raw material charge of the invention contains
- leucogabbro 25 to 45 % by weight
- troctolite 5 to 20 % by weight, and
- dolomite 5 to 30 % by weight.

In addition, the raw material charge can contain an amount of one ore more rock materials selected from the group of basic and ultrabasic rocks consisting of gabbro, diabase, basalt and peridotite. Such an amount is typically 7 to 58 % by weight.

In this specification the term 'leucogabbro' means a rock material that contains more than 65 volume % plagioclase mineral. Preferably the anorthite content of the plagioclase mineral should be at least 50 mole %.

In this invention, the term 'troctolite' is intended encompass any troctolite rock material which contains more than 50 volume % olivine mineral. Preferably the fayalite content of the olivine mineral should be at least 35 mole %. Preferably the range should be from 35 to 65 mole %.

In addition to the major components mentioned above it is also possible to include in the charge recycled mineral materials, such as excess fibres and unfiberized material, so-called pearls, or waste materials from various industrial processes, such as from flotation processes, slag, glass, and/or cementitious products, etc.

By using leucogabbro as the aluminium source, better melt behaviour of the raw material charge is obtained, for example a higher viscosity and lower surface tension, as compared to using bauxite as the aluminium source. This is due to the fact that in leucogabbro, the aluminium is bound as a salt with the silicate, i. e. as an aluminium silicate. Consequently there is no need for the raw material to undergo calcination or silicate formation, as is the case with bauxite, which has to be calcinated from aluminium hydroxide. Thus the aluminium containing mineral melts more easily and with less energy than the traditional materials.

Similar advantages in melt behaviour are also achieved by using troctolite as the iron and magnesium source rather than traditional materials. Especially valuable advantages are obtained compared to using traditional iron containing sources, such as iron ores, wherein the iron is mainly bound in the form of hydroxides and sulfides, as the only source. Such inclusions invariably mean losses in the form of reduced metallic iron which collects at the bottom of the furnace, and/or energy losses in the form of water vapor emissions, and/or loads on the environment in the form of sulphur emissions.

Thus by using leucogabbro and troctolite rock materials in combination in the raw material charge, it is possible to introduce into the melt and thus into the fibre, aluminium and iron/magnesium in the desired amounts for the purpose in question. In addition it is possible to affect the melting behaviour of the mineral charge, the silicate bound metal minerals providing for a smooth melting process to give a melt with a viscosity range suitable for spinning into fibres. In addition, energy losses can be avoided.

By using the raw material charge according to the invention it is possible to make mineral fibres having typically the following composition in % by weight

| | |
|---|---|
| SiO₂ | 38-48 |
| Al₂O₃ | 12-20 |
| CaO | 10 - 20 |
| MgO | 5 - 20 |
| FeO | 4 - 12 |
| Na₂O + | |
| K₂O | 0 - 4 |
| TiO₂ | 0 - 4 |
| Other | 0 - 4 |

More specifically such fibres can have the following composition in % by weight

| | |
|---|---|
| SiO₂ | 42 - 46 |
| Al₂O₃ | 14 - 17 |
| CaO | 10-20 |
| MgO | 5 - 20 |
| FeO | 4 - 12 |
| Na₂O + | |
| K₂O | 0 - 4 |
| TiO₂ | 0 - 4 |
| Other | 0 - 4 |

The raw material charge can be introduced in an electrical furnace where it is melted using electrodes which extend into the charge. Alternatively, the raw material charge can be introduced in a cupola furnace where typically coke is used as fuel. The raw material is usually charged into the furnace in particulated form, the particle size typically ranging from a few millimeters up to e.g. fifteen centimeters. According to an embodiment of the invention, at least some of the raw material is in particulate form, but it is also contemplated that some of the raw material can be in lump form. Especially fayalite rich troctolite can advantageously be used in lump form, without exhibiting any serious melting problems in the melting furnace.

According to an embodiment of the invention, the raw material is brought into particulate form, and compressed into briquettes of a suitable shape and size, using conventional briquetting techniques and equipment, such as compression vibration techniques. The briquettes preferably contain a binder for the raw material, such as cement, clay, water glass, or organic binders such as molasses. The method for making the briquettes is as such known to the person skilled in the art.

The present invention is also directed to a method of producing mineral fibres comprising forming a melt from a raw material charge containing leucogabbro, troctolite and dolomite rock, in the following amounts
- leucogabbro 10 to 45 % by weight
- troctolite 3 to 20 % by weight, and
- dolomite 5 to 30 % by weight,
and forming fibres from the so formed melt.

The fibre forming method can be any method known in the art for forming fibres from a mineral melt One suitable method uses a cascade type spinning arrangement In this method a stream of molten mineral material is made to hit, in series, a number of consecutive spinning rotors. During this process the molten melt is effectively drawn into fibres of a suitable length and thickness.

Preferably the raw material charge comprises
- leucogabbro 25 to 45 % by weight
- troctolite 5 to 20 % by weight, and
- dolomite 5 to 30 % by weight.

In addition, the raw material charge can comprise 7 to 58 % by weight of one or more basic to ultrabasic rocks selected from the group consisting of gabbro, diabase, basalt and peridotite.

The invention will be described in the following with reference to the following examples, which will not be limiting in any way.

### EXAMPLE 1

Raw material charges was made by finely dividing and mixing the rock materials mentioned in the following Tables 1, 2 and 3, in the indicated amounts expressed as % by weight

**Table 1**

| Charge | % by weight | % by weight | % by weight | % by weight | % by weight |
|---|---|---|---|---|---|
| Leucogabbro | 40 | 31 | 32.5 | 35.5 | 34.5 |
| Peridotite | 30.5 | 17.5 | | 32 | 33.5 |
| Troctolite | 13.5 | 13 | 14.5 | 13.5 | 13 |
| Gabbro | | 16 | 25 | | |
| Dolomite | 16 | 22.5 | 28 | 19 | 19 |
| Sum | 100.0 | 100.0 | 100.0 | 100.0 | 100.0 |

**Table 2**

| Charge | % by weight | % by weight | % by weight |
|---|---|---|---|
| Leucogabbro | 28 | 28.5 | 28.5 |
| Troctolite | 9.5 | 14.7 | 13.5 |
| Diabase | 37.5 | 15.5 | 32. 5 |
| Dolomite | 25 | 13.5 | 25.5 |
| Centrifuge waste | | 17 | |
| Cement | | 6.4 | |
| Olivine | | 4.4 | |
| Sum | 100.0 | 100.0 | 100.0 |

**Table 3**

| Charge | % by weight | % by weight | % by weight IV | % by weight V | % by weight VI |
|---|---|---|---|---|---|
| Leucogabbro | 25 | 25 | 10 | 15 | 25 |
| Basalt | 28.5 | 28.5 | | | |
| Troctolite | 12 | 13 | 4 | 6 | 10 |
| Metagabbro | | | 45 | 45 | 31 |
| Gabbro | 16 | 15.5 | | | |
| Dolomite | 18.5 | 18 | 16 | 17 | 19 |
| Peridotite | | | 25 | 17 | 15 |
| Sum | 100.0 | 100.0 | 100.0 | 100.0 | 100.0 |

Further tests were carried out where three charges according to the invention were made (charges I, II and III), as well as a charge (Comp) where bauxite was used instead of leucogabbro as the aluminium source. The viscosities of the melts were measured, the value for the charge I being an average of two measurements, and those of the charges II and III being an average of eight and six measurements, respectively. The values for the bauxite charge is based on an average of 18 measurements. The results are presented in the following Table 4.

The viscosimeter measurements in this case measure only the relative viscosities for comparing the viscosities between different melts. The measurements were carried out in a simple apparatus which comprises a cone shaped receptacle for receiving the melt which receptacle opens into a vertical shaft attached to its bottom. The melt first flows a short distance through the vertical shaft and then into a horisontal tube attached to and opening into the vertical shaft. Depending on the viscosity of the melt, the melt flows a distance into the horisontal shaft until it solidifies when cooled. The lower the viscosity of the melt, the further into the tube the melt flows before cooling. The horisontal tube carries in its other end a measuring stick which is insertable in the opening of the tube. The distance traveled by the melt until solidification is then measured as the depth of insertion of the measuring stick in the tube until it hits the solidified melt. Thus a higher value for the depth of insertion in mm means a higher viscosity of the melt, and vice versa.

**Table 4**

| Charge (% by weight) | I | II | III | Comp. |
|---|---|---|---|---|
| Peridotite | 18 | 17 | 17 | 21 |
| Meta-gabbro | 9 | 14.5 | 16 | 46 |
| Dolomite | 19 | 20 | 21 | 15.5 |
| Leucogabbro | 38 | 34 | 34 | |
| Troctolite | 16 | 14.5 | 12 | |
| Blast furnace slag | | | | 10 |
| Bauxite | | | | 7.5 |
| Viscosity (mm) | 100 mm | 108 mm | 98 mm | 80 mm |

From the results it can be seen that by using leucogabbro rather than bauxite as the aluminium source, a relatively substantial increase in the viscosity is obtained, while the composition of the charges I, II, III are relatively similar.

In the following Table 5 the compositions of the charges I, II, and III, as well as that of the comparative charge are shown. In addition, the compositions for the fibres made from the charges IV, V and VI of Table 3 are included.

**Table 5**

| Composition (% by weight) | I | II | III | Comp | IV | V | VI |
|---|---|---|---|---|---|---|---|
| SiO₂ | 42.1 | 42.2 | 42.2 | 42.4 | 46.2 | 45.5 | 43.7 |
| Al₂O₃ | 17.2 | 16.7 | 16.9 | 16.6 | 14.2 | 15.1 | 16.0 |
| CaO | 17.1 | 17.3 | 17.9 | 17.5 | 15.6 | 16.2 | 17.1 |
| MgO | 13.3 | 13.4 | 13.2 | 12.5 | 12.9 | 12.4 | 12.7 |
| FeO | 6.9 | 6.9 | 6.5 | 6.8 | 7.0 | 6.9 | 6.8 |
| Na₂O + K₂O | 2.1 | 2.1 | 2.1 | 2.6 | 2.8 | 2.6 | 2.4 |
| TiO₂ | 1.1 | 1.1 | 1.0 | 1.2 | 1.1 | 1.1 | 1.1 |
| Other | 0.2 | 0.3 | 0.2 | 0.4 | 0.2 | 0.2 | 0.2 |

## Claims

1. Raw material charge for the production of mineral fibres comprising leucogabbro, troctolite and dolomite in the following amounts
- leucogabbro 10 to 45 % by weight
- troctolite 3 to 20 % by weight, and
- dolomite 5 to 30 % by weight

2. The raw material charge according to claim 1, wherein the charge comprises
- leucogabbro 25 to 45 % by weight
- troctolite 5 to 20 % by weight, and
- dolomite 5 to 30 % by weight.

3. The raw material charge according to claim 1 or 2 wherein the charge comprises 7 to 58 % by weight of one or more rock materials selected from the group consisting of gabbro, diabase, basalt and peridotite.

4. The raw material charge according to any one of the preceding claims, wherein the plagioclase mineral in the leucogabbro contains at least appr. 50 mole % of anorthite.

5. The raw material charge according to any one of the preceding claims, wherein the olivine mineral in the troctolite contains at least appr. 35 mole % of fayalite.

6. The raw material charge according to any one of the preceding claims, wherein the charge is at least partly in the form of briquettes compressed from particulate raw material.

7. Method for the production of mineral fibres comprising forming a melt from a raw material charge comprising leucogabbro, troctolite and dolomite rock, in the following amounts
- leucogabbro 10 to 45 % by weight
- troctolite 3 to 20 % by weight, and
- dolomite 5 to 30 % by weight.
and forming fibres from the so formed melt.

8. The method according to claim 7, wherein the charge comprises
- leucogabbro 25 to 45 % by weight,
- troctolite 5 to 20 % by weight, and
- dolomite 5 to 30 % by weight

9. The method according to claim 7 or 8 wherein the charge comprises 7 to 58 % by weight of one or more rock materials selected from the group consisting of gabbro, diabase, basalt and peridotite.

10. The method according to any one of the claims 7 to 9 wherein the charge is at least partly in the form of briquettes compressed from particulate raw material.

## Patentansprüche

1. Rohmaterialbeschickung zur Herstellung von Mineralfasern, umfassend Leucogabbro, Troctolit und Dolomit in folgenden Mengen
- Leucogabbro 10 bis 45 Gew.-%
- Troctolit 3 bis 20 Gew.%, und
- Dolomit 5 bis 30 Gew.-%.

2. Rohmaterialbeschickung gemäß Anspruch 1, wobei die Beschickung umfasst
- Leucogabbro 25 bis 45 Gew.-%
- Troctolit 5 bis 20 Gew.-%, und
- Dolomit 5 bis 30 Gew.-%.

3. Rohmaterialbeschickung gemäß Anspruch 1 oder 2, wobei die Beschickung 7 bis 58 Gew.-% eines oder mehrerer Gesteinsmaterialien, ausgewählt aus Gabbro, Diabas, Basalt und Peridotit, umfasst.

4. Rohmaterialbeschickung gemäß einem der vorstehenden Ansprüche, wobei das Plagioklasmineral im Leucogabbro mindestens etwa 50 Mol-% Anorthit enthält.

5. Rohmaterialbeschickung gemäß einem der vorstehenden Ansprüche, wobei das Olivinmineral im Troctolit mindestens etwa 35 Mol.-% Fayalit enthält.

6. Rohmaterialbeschickung gemäß einem der vorstehenden Ansprüche, wobei die Beschickung mindestens teilweise in Form von Briketts, welche aus teilchenförmigem Rohmaterial zusammengepresst sind, vorliegt.

7. Verfahren zur Herstellung von Mineralfasern, umfassend das Bilden einer Schmelze aus einer Rohmaterialbeschickung, welche Leucogabbro, Troctolit und Dolomitgestein in folgenden Mengen umfasst
- Leucogabbro 10 bis 45 Gew.-%
- Troctolit 3 bis 20 Gew.-%, und
- Dolomit 5 bis 30 Gew.-%
und das Bilden von Fasern aus der so gebildeten Schmelze.

8. Verfahren gemäß Anspruch 7, wobei die Beschickung umfasst
- Leucogabbro 25 bis 45 Gew.-%
- Troctolit 5 bis 20 Gew.-%, und
- Dolomit 5 bis 30 Gew.-%.

9. Verfahren gemäß Anspruch 7 oder 8, wobei die Beschickung 7 bis 58 Gew.-% eines oder mehrerer Gesteinsmaterialien, ausgewählt aus Gabbro, Diabas, Basalt und Peridotit, umfasst.

10. Verfahren gemäß einem der Ansprüche 7 bis 9, wobei die Beschickung mindestens teilweise in Form von Briketts, welche aus teilchenförmigem Rohmaterial zusammengepresst sind, vorliegt.

## Revendications

1. Charge de matière première pour la production de fibres minérales, comprenant leucogabbro, troctolite et dolomite dans les quantités suivantes :
- leucogabbro 10 à 45% en poids
- troctolite 3 à 20% en poids, et
- dolomite 5 à 30% en poids.

2. Charge de matière première selon la revendication 1, dans laquelle la charge comprend :
- leucogabbro 25 à 45% en poids
- troctolite 5 à 20% en poids, et
- dolomite 5 à 30% en poids.

3. Charge de matière première selon la revendication 1 ou 2, dans laquelle la charge comprend 7 à 58% en poids d'une ou plusieurs matières rocheuses choisies dans le groupe composé de gabbro, diabase, basalte et péridotite.

4. Charge de matière première selon une quelconque des revendications précédentes, dans laquelle la matière minérale de type plagioclase dans le leucogabbro contient au moins 50 mol% environ d'anorthite.

5. Charge de matière première selon une quelconque des revendications précédentes, dans laquelle la matière minérale de type olivine dans la troctolite contient au moins 35 mol% environ de fayalite.

6. Charge de matière première selon une quelconque des revendications précédentes, dans laquelle la charge est au moins en partie sous la forme de briquettes comprimées à partir d'une matière première en particules.

7. Méthode de production de fibres minérales comprenant la formation d'une masse fondue à partir d'une charge de matière première comprenant des roches de leucogabbro, troctolite et dolomite, dans les quantités suivantes
- leucogabbro 10 à 45% en poids
- troctolite 3 à 20% en poids, et
- dolomite 5 à 30% en poids.
et la formation de fibres à partir de la masse fondue ainsi obtenue.

8. Méthode selon la revendication 7, dans laquelle la charge comprend
- leucogabbro 25 à 45% en poids
- troctolite 5 à 20% en poids, et
- dolomite 5 à 30% en poids.

9. Méthode selon la revendication 7 ou 8, dans laquelle la charge comprend 7 à 58% en poids d'une ou plusieurs matières rocheuses choisies dans le groupe composé de gabbro, diabase, basalte et péridotite.

10. Méthode selon une quelconque des revendications 7 à 9, dans laquelle la charge est au moins en partie sous la forme de briquettes comprimées à partir d'une matière première en particules.
